# EUROPEAN PATENT APPLICATION

(11) **EP 3 689 677 A1**
(43) Date of publication of application: **05.08.2020**
(21) Application number: 19154229.9
(22) Date of filing: 29.01.2019
(51) Int. Cl.: B60Q 1/04, F21V 14/00, G02B 27/10, G02B 27/28, F21S 41/125, F21S 41/135, F21S 41/663, F21S 41/67, F21S 41/16, F21Y 115/30

(54) **LIGHTING DEVICE AND METHOD FOR ILLUMINATION**

(71) Applicant: Gottfried Wilhelm Leibniz Universität Hannover, 30167 Hannover (DE)
(72) Inventor: LI, Yang, 30657 Hannover (DE)
(74) Representative: Gramm, Lins & Partner Patent- und Rechtsanwälte PartGmbB

(57) **Abstract**

The invention is related to a lighting device with the following features:
a) a first light source (1) for emission of first light (10),
b) a second light source (2) for emission of second light (20),
c) wherein one of the first and the second light (10, 20) is p-polarised and the other of the first and the second light (10, 20) is s-polarised,
d) a polarised beam splitter (3) (PBS) on which the first and the second light (10, 20) is irradiated,
e) a first reflection unit (13) which receives that share of the first and second light (10, 20) which is transmitted by the polarised beam splitter (3),
f) a second reflection unit (23) which receives that share of the first and second light (10, 20) which is reflected by the polarised beam splitter (3),
g) wherein the light (10, 20) received by the first reflection unit (13) is at least partially reflected by the first reflection unit (13), and the light (11) reflected by the first reflection unit (13) is emitted in a light emission direction (4) of the lighting device,
h) wherein the light (10, 20) received by the second reflection unit (23) is at least partially reflected by the second reflection unit (23), and the light (21) reflected by the second reflection unit (23) is emitted in the light emission direction (4) of the lighting device.

The invention is further related to a method for optional illumination and reproduction of projections on a projection surface.

## Description

The invention is related to a lighting device according to claim 1. The invention is further related to a method for optional illumination and reproduction of projections and a projection surface.

There are several proposals in the prior art, e.g. in US 2018/0340664 A1, for intelligent automotive head lamp systems which combine good illumination of the ambience with precisely glare free high beams. Further, there are proposals to use such vehicle head lamps to create projections on the road to enhance the traffic safety and driving comfort. As a trend of intelligent transportation in the future, the creation of colored symbols on road projection is recently brought up. Such projections with colored symbols make the light information on the road more noticeable for drivers and other road users. It also opens the possibility to allow drivers to communicate with other road participants during both day time and night time.

However, the proposals in the prior art suffer problems when white light illumination and colored projection shall be produced at the same time with high efficiency and high output luminous flux. The present invention is able to solve this problem.

In one embodiment, the present invention is directed to a lighting device with the following features:
a) a first light source for emission of first light,
b) a second light source for emission of second light,
c) wherein one of the first and the second light is P-polarized and the other of the first and the second light is S-polarized,
d) a polarized beam splitter (PBS) upon which the first and the second light is irradiated,
e) a first reflection unit, which receives that share of the first and second light which is transmitted by the polarized beam splitter,
f) a second reflection unit, which receives that share of the first and second light which is reflected by the polarized beam splitter,
g) wherein the light received by the first reflection is at least partially reflected by the first reflection unit, the light reflected by the first reflection unit is emitted into a light emission direction of the lighting device,
h) wherein the light received by the second reflection is at least partially reflected by the second reflection unit, the light reflected by the second reflection unit is emitted into the light emission direction of the lighting device.

The present invention allows for emitting white light illumination and colored (chromatic) projection at the same time with high efficiency and high output luminous flux, both during day time and night time. Both types of light are emitted by the lighting device of the invention into the same emission direction of the lighting device.

The first reflection unit and/or the second reflection unit can be a pixel controllable reflection unit, like a LCoS unit (LCoS - Liquid Crystal on Silicon), in particular a twisted nematic LCoS unit, or a spatial phase light modulator. By the pixelwise control the reflection unit reflects a pixel pattern according to the control signals provided to the reflection unit.

The polarized beam splitter can be a commercially available polarized beam splitter, e.g. from the company Edmund Optics. The polarized beam splitter can have a cube or cuboid shape, for example.

According to an advantageous embodiment of the invention the light reflected by the first reflection unit is irradiated on the polarized beam splitter and emitted by the polarized beam splitter in a transmitting or reflecting manner into the light emission direction of the lighting device. In such way, the polarized beam splitter is utilized additionally for redirecting the reflected light from the first reflection unit into the light emission direction of the lighting device. This provides for a very compact and efficient design of the lighting device.

According to an advantageous embodiment of the invention the light reflected by the second reflection unit is irradiated on the polarized beam splitter and emitted by the polarized beam splitter in a transmitting or reflecting manner into the light emission direction of the lighting device. In such way, the polarized beam splitter is utilized additionally for redirecting the reflected light from the second reflection unit into the light emission direction of the lighting device. This provides for a very compact and efficient design of the lighting device.

According to an advantageous embodiment of the invention the polarized beam splitter has a common irradiation surface on which the first and the second light is irradiated. By such means the lighting device is further optimized for efficient and compact design. The first and second light source can be arranged next to each other, such that the first and the second light may be irradiated in the same light path or as parallel light on the polarized beam splitter.

According to an advantageous embodiment of the invention one of the first and the second light is single-colored light and the other of the first and second light is multi-colored light and/or color changing light. This allows, for example, for producing white light illumination and chromatic projection at the same time. It should be noticed that in the terminology of the present application the term "single-colored light" covers light with only one wave length (monochromatic light), but is not limited to such light. Single-colored light also covers any color of the light, like white light or any else color. The term "multi-colored light" means light with one or more colors, as required in the specific application.

In order to make optimum use of the polarized beam splitter, the first and the second light need to be differently polarized. This can be achieved by using specific first and second light sources which already provide for such polarized light. However, it is also possible to use other light sources which do not emit polarized light on their own. In such case additional optical elements for creating the desired polarization of the first and the second light are required. For example, the white light can be created by blue laser diodes, wherein the light color is changed by an optical element into white color and is then polarized into the desired polarization.

According to an advantageous embodiment of the invention the first light source comprises one or a plurality of RGB laser diodes and/or the second light source comprises one or a plurality of RGB laser diodes. The use RGB laser diodes (RGB - Red Green Blue) has the advantage that any desired color can be created as the first light or the second light. A further advantage is that such light sources are commercially available as polarized light sources, such that no separate optical elements are required for creating the desired polarization of the first and/or second light. The RGB laser diodes could be mounted in a first mounting orientation for creating the P-polarized light and in a different second mounting orientation for creating the S-polarized light. For example, if a plurality of RGB laser diodes is used both for the first and second light source, all of these RGB laser diodes could be mounted in different orientations on the same printed circuit board.

According to an advantageous embodiment of the invention the lighting device is a headlamp, a spotlight, a floodlight, a projector light, an ambience light or an entertainment light. For example, the lighting device can be a head lamp of a vehicle. However, as can be seen, there are a plurality of applications for the present invention.

A further embodiment of the invention relates to a method for optional illumination and reproduction of projections on a projection surface with first light of a first light source and second light of a second light source, wherein one of the first and the second light is P-polarized and the other of the first and the second light is S-polarized, wherein the first and the second light is irradiated on a polarized beam splitter, wherein that share of the first and the second light which is transmitted by the polarized beam splitter is at least partially reflected by a first reflection unit and the light reflected by the first reflection unit is emitted into a light emission direction onto the projection surface, wherein that share of the first and the second light which is reflected by the polarized beam splitter is at least partially reflected by a second reflection unit and the light reflected by the second reflection unit is emitted into the light emission direction onto the projection surface. By such method the afore-mentioned advantages of the invention are also achieved.

According to an advantageous embodiment of the invention an optional illumination and reproduction of projections on the projection surface is performed with single-colored light and/or multi-colored light and/or color changing light.

According to an advantageous embodiment of the invention the method is performed by means of a lighting device of the afore-mentioned type.

According to an advantageous embodiment of the invention, the method comprises one, multiple or all of the following features a), b), c), d):
a) at least temporarily the first and the second light is generated as single-colored light with the same light color,
b) at least temporarily the first and the second light is generated as multi-colored light,
c) at least temporarily the first and the second light is generated with synchronous color changes,
d) at least temporarily the first light is generated as single-colored light and the second light is generated as multi-colored light and/or as color changing light.

This shows the enormous plurality of practical applications for which the present invention can be utilized.

The multi-colored light and/or the colored changing light can be created by controlling the respective light sources, for example RGB light sources, in a sequential way which means that the single light colors are activated sequentially in time. Such that the images with different colors are quickly superposed in the projection area. By doing this very quickly, the desired color effects are achieved in human brains due to the persistence of human vision.

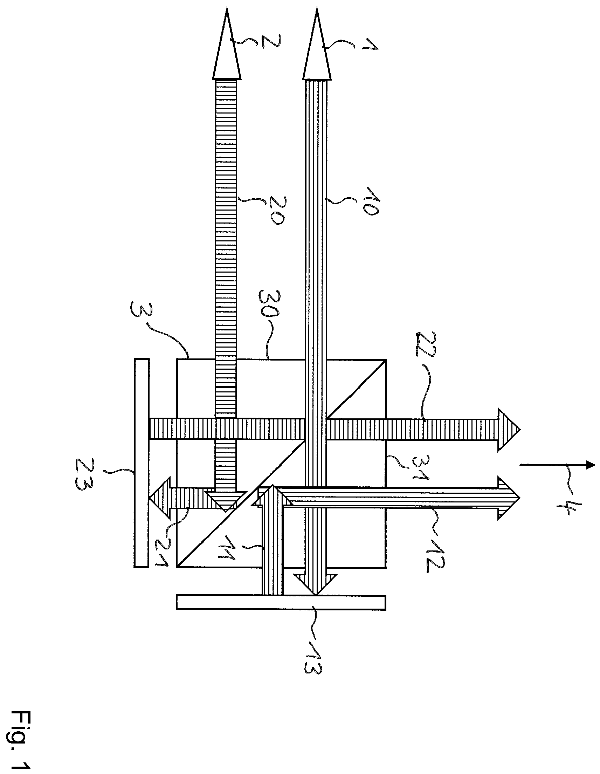

The invention is further described using an example which is depicted in figure 1.

Figure 1 shows a lighting device having a first light source 1 and a second light source 2. It is assumed that the first light source 1 emits first light 10 having one polarization, while the second light source 2 emits second light 20 with a different polarization. Both the first light 10 and the second light 20 is irradiated on a common irradiation surface 30 of a polarized beam splitter 3. The polarized beam splitter 3 is transmissive for the first light 10 which is then irradiated through the polarized beam splitter 3 on a first reflection unit 13. The first reflection unit 13 is located on the opposite side of the polarized beam splitter than the first and the second light source 1, 2.

The polarized beam splitter 3 is reflective for the second light 20, which is reflected as light 21 to a second reflection unit 23. The second reflection unit 23 is therefore located at a 90 degree angle to the first reflection unit 13 on a side of the polarized beam splitter where none of the first and second light sources 1, 2 and the first reflection unit 13 is located.

The first reflection unit 13 reflects at least a share 11 of the light received from the polarized beam splitter 3 back to the polarized beam splitter 3. In this light path the polarized beam splitter 3 is reflective for the light 11, which is then emitted from the polarized beam splitter 3 on an emission side 31 of the polarized beam splitter 3 as an emitted light 12 in a light emission direction 4 of the lighting device.

The second reflection unit 23 reflects at least a share 22 of the light 21 received from the polarized beam splitter 3 back to the polarized beam splitter 3. In this light path the polarized beam splitter 3 is transmissive for the light 22, which is then emitted from the polarized beam splitter 3 on the same emission side 31 of the polarized beam splitter 3 in the light emission direction 4 of the lighting device. As can be seen, as a result all the light 12, 22 emitted from the lighting device is emitted from the same common emission surface 31 of the polarized beam splitter 3.

For example, the first reflection unit 13 and the second reflection unit 23 can be embodied as a twisted nematic LCoS panel.

A twisted nematic LCoS panel is a reflective liquid crystal amplitude light modulator, which can have a high resolution and a higher efficiency than a transmissive liquid crystal device. It can work with linearly polarized light and a polarized beam splitter (PBS). By partially or totally changing the polarization of the incident light on the modulator, the LCoS panel controls the output percentage of light of each pixel combining with the PBS, thus a gray scale lighting pattern is generated. Commercial laser diodes have their individual and almost linearly polarized output beam, this allows the use of laser diodes for the first and second light source 1, 2 with twisted nematic LCoS panels without a polarizer, which is normally used for filtering unpolarized light. Therefore the efficiency of using laser with an LCoS panel can be significantly improved. By placing these laser diodes in different conditions, various polarization directions are available. Based on these properties, the lighting device of the invention may use a light emission module that composes of multiple RGB laser diodes positioned in 2 polarizations, a PBS, 2 LCoS panels and correspondent optical system, such that the lighting device can emit chromatic light symbols without reducing the output power for white light illumination.

By turning on all laser diodes, which are positioned to emit S-polarized light according to the PBS, a white light is generated and reflected to one LCoS panel by the PBS. By turning the different laser diodes that are positioned to emit P-polarized laser on and off in rapid sequence, the light used to construct chromatic effects is generated. This light passes through the PBS and then transmits to another LCoS to produce projecting content on a projection surface, e.g. on the road.

The two beams 10, 20 with opposite polarizations are independent meanwhile the two LCoS panels also work separately. This allows the white light illumination and the chromatic projection being standalone to each other. It allows that the chromatic projection is superposed to the white light on the projection surface.

In conclusion, this invention combines the space separated method and the color sequential method. The colored light symbols can be generated by a color sequential approach, while the overlapping of two beams can be realized by space separated mixing approach. As a result, it is no longer needed to take advantage of human vision systems to achieve the white effect in human brains but gives the actual white light, leading to an illumination brightness improvement compared to other systems.

Besides the exemplary usage introduced above, additional practical functions can also be realized by this invention. Due to both white and colored effects in this invention can be generated by mixing the RGB laser diodes, the shift between producing white light and sequential RGB light is very flexible. This means through changing the control scheme, the two beams 10, 20 in the two paths can be all white or all chromatic.

The layout of lighting device with the PBS and the LCoS panels has the advantage that the two light paths from the lights 10, 20 to the emitted lights 12, 22 have same pathway and also a same distance, which leads to an entire overlapping of the projections from the two LCoS panels. This means each pixel from one LCoS is completely superposed to a pixel from another LCoS. Based on this advantage, the shift between white and chromatic light is optimized in these two situations.

When both light paths 10, 20 have white light, the lighting device gets more output optical power for illumination than that when only one light path is in white. This can be applied in some terrifically dark situations, for example some rural ways without streetlamps at night, for a better vision. And due to the entirely overlapping of the projections, the related pixels on both LCoS panels can be shut off in order to create dark channels for de-glaring other road participants in such environment.

A possible environment usage is using both beams as independent sequential RGB light. When driving in an extremely bright environment, such as sunny days in summer, it may be necessary to have more noticeable projecting information on the road or other projection surface. If using only one LCoS panel for such projections the contrast behavior is lower than in the case where another LCoS panel with related laser diodes is used also for chromatic projection. The entirely projection overlapping of the two LCoS panels makes it easy to have the same projection contents at a same position, and the additional sequential colored light enhances the color contrast by increasing the optical power for the projection, so that the on-road projection is more visible and clear to both drivers themselves and other road users in such situations. Another example of using both the light 10, 20 as sequential RGB light is, when the images on the two LCoS panels are slightly different, and they are superposed by this lighting device, 3D effects can be observed when using the polarization glasses.

Thus this invention can be used as a 3D projector for entertainment or for autonomous driving in the future.

## Claims

1. Lighting device with the following features:
a) a first light source (1) for emission of first light (10),
b) a second light source (2) for emission of second light (20),
c) wherein one of the first and the second light (10, 20) is P-polarized and the other of the first and the second light (10, 20) is S-polarized,
d) a polarized beam splitter (3) (PBS) upon which the first and the second light (10, 20) is irradiated,
e) a first reflection unit (13), which receives that share of the first and second light (10, 20) which is transmitted by the polarized beam splitter (3),
f) a second reflection unit (23), which receives that share of the first and second light which is reflected by the polarized beam splitter (3),
g) wherein the light (10, 20) received by the first reflection unit (13) is at least partially reflected by the first reflection unit (13), the light (11) reflected by the first reflection unit (13) is emitted into a light emission direction (4) of the lighting device,
h) wherein the light received by the second reflection unit (23) is at least partially reflected by the second reflection unit (23), the light (21) reflected by the second reflection unit (23) is emitted into the light emission direction (4) of the lighting device.

2. Lighting device according to claim 1, **characterized in that** the light (11) reflected by the first reflection (13) unit is irradiated on the polarized beam splitter (3) and emitted by the polarized beam splitter (3) in a transmitting or reflecting manner into the light emission direction (4) of the lighting device.

3. Lighting device according to any of the preceding claims, **characterized in that** the light (21) reflected by the second reflection unit (23) is irradiated on the polarized beam splitter (3) and emitted by the polarized beam splitter (3) in a transmitting or reflecting manner into the light emission direction (4) of the lighting device.

4. Lighting device according to any of the preceding claims, **characterized in that** the polarized beam splitter (3) has a common irradiation surface (30) on which the first and the second light (10, 20) is irradiated.

5. Lighting device according to any of the preceding claims, **characterized in that** one of the first and the second light (10, 20) is single-colored light and the other of the first and second light (10, 20) is multi-colored light and/or color changing light.

6. Lighting device according to any of the preceding claims, **characterized in that** the first light source (1) comprises one or a plurality of RGB laser diodes and/or the second light source (2) comprises one or a plurality of RGB laser diodes.

7. Lighting device according to any of the preceding claims, **characterized in that** the lighting device is a headlamp, a spotlight, a floodlight, a projector light, an ambience light or an entertainment light.

8. Method for optional illumination and reproduction of projections on a projection surface with first light (10) of a first light source (1) and second light (20) of a second light source (2), wherein one of the first and the second light (10, 20) is P-polarized and the other of the first and the second light (10, 20) is S-polarized, wherein the first and the second light (10, 20) is irradiated on a polarized beam splitter (3), wherein that share of the first and the second light (10, 20) which is transmitted by the polarized beam splitter (3) is at least partially reflected by a first reflection unit (13) and the light (11) reflected by the first reflection unit (13) is emitted into a light emission direction (4) onto the projection surface, wherein that share of the first and the second light (10, 20) which is reflected by the polarized beam splitter (3) is at least partially reflected by a second reflection unit (23) and the light (21) reflected by the second reflection unit (23) is emitted into the light emission direction (4) onto the projection surface.

9. Method according to claim 8, **characterized in that** an optional illumination and reproduction of projections on the projection surface is performed with single-colored light and/or multi-colored light and/or color changing light.

10. Method according to any of claims 8 to 9, **characterized in that** the method is performed by means of a lighting device according to any of claims 1 to 7.

11. Method according to any of claims 8 to 10, **characterized by** one, multiple or all of the following features a), b), c), d):
a) at least temporarily the first and the second light (10, 20) is generated as single-colored light with the same light color,
b) at least temporarily the first and the second light (10, 20) is generated as multi-colored light,
c) at least temporarily the first and the second light (10, 20) is generated with synchronous color changes,
d) at least temporarily the first light (10) is generated as single-colored light and the second light (20) is generated as multi-colored light and/or as color changing light.
